# EUROPEAN PATENT APPLICATION

(11) **EP 2 503 193 A1**
(43) Date of publication of application: **26.09.2012**
(21) Application number: 12159154.9
(22) Date of filing: 13.03.2012
(51) Int. Cl.: F16H 57/04

(54) **Lubrication device for lubricating a splined connection**

(30) Priority: 21.03.2011 US 201113052364
(71) Applicant: Deere & Company, Moline, IL 61265-8098 (US)
(72) Inventor: Voth, Danny G, Liberty, KS Kansas 67351 (US)
(74) Representative: Dehnhardt, Florian Christopher

(57) **Abstract**

A lubrication device for lubricating a splined connection comprises at least one rotating component (24) which has internal splines (26) along an axially extending opening. A splined shaft (28) has a pattern of external splines thereon which corresponds to said internal splines (26). A plug (34) is positioned in said axially extending opening, said plug (34) has a hole (36) centrally located therein.

## Description

The present invention relates to a lubrication device for lubricating a splined connection.

A gearbox, such as a transmission or a pump drive gearbox typically lubricates the gears by at least one of the gears being partially submerged in a reservoir of lubricating oil, causing the oil to be splashed about the interior portions of a housing of the gearbox. There can even be protrusions from portions of the gear to cause more oil to splash about the interior of the housing of the gearbox. This is a random type of lubrication that has been utilized in many types of transmissions with the assumption that the lubrication fluid will eventually get to the needed places by it being randomly splashed about the interior of the gearbox and onto the moving parts therein.

Broadly, a gearbox can be thought of as an arrangement that converts rotational speed and torque into another speed and torque and is often utilized in vehicles powered by an engine that provides a rotational torque source of power where the gearbox alters the speed and torque output to a desired level. Gearboxes are also used in a wide variety of stationary applications such as wind turbines. Gearboxes are also used in agricultural, industrial, forestry, construction, mining, as well as automotive equipment. Gearboxes can be thought of as a simple type of transmission often used to reduce speed or provide a change in direction of the rotating power. Usually, the distinction is that a gearbox has a gear ratio that does not change during use and is fixed at the time the gearbox is constructed. In contrast to the construct of a gearbox, a transmission will has the capability to select different gear ratios.

Gearboxes usually have at least one splined connection where a splined shaft interacts with a gear that has internal splines that corresponds to a pattern of external splines on the splined shaft. The lubrication of the splines is needed to prevent fretting of the splined connection. This is difficult when the splines are spinning at a high speed.

What is needed in the art is a system to more efficiently lubricate of a splined connection in a gearbox to allow for the more efficient running of the gearbox at a lower temperature.

The present invention provides a lubrication device for lubricating a splined connection in a gearbox.

This and other objects are achieved by the present invention, wherein a lubrication device for lubricating a splined connection is provided. The lubrication device comprises at least one rotating component which has internal splines along an axially extending opening. A splined shaft has a pattern of external splines thereon which corresponds to said internal splines. A plug is positioned in said axially extending opening, said plug has a hole centrally located therein.

For a complete understanding of the objects, techniques, and structure of the invention reference should be made to the following detailed description and accompanying drawings, wherein similar components are designated by identical reference numerals:
- Fig. 1: is a side view of a vehicle using a gearbox comprising a lubrication device according to the present invention,
- Fig. 2: is a partial cross sectional perspective view of the gearbox as used in the vehicle of Fig. 1, and
- Fig. 3: is an expanded back view through a plug utilized to enhance lubrication of a splined connection in the gearbox of Fig. 2.

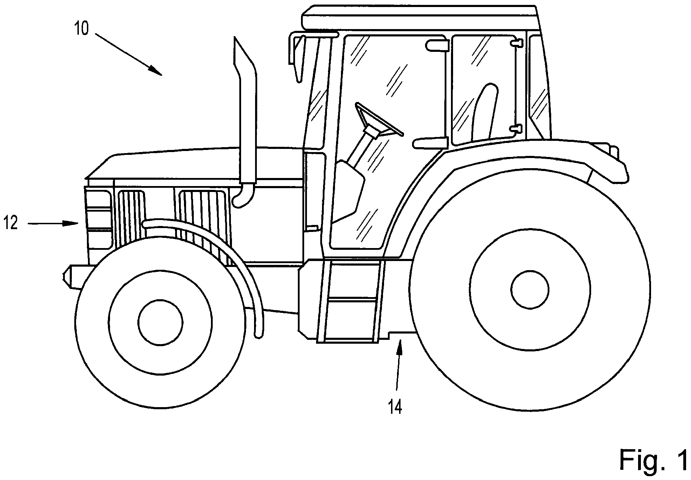

Referring now to the drawings, and more particularly to Fig. 1, there is shown a vehicle 10 having a power generating device 12 formed by a diesel engine that provides mechanical rotary motion to a power transfer device or gearbox 14 having rotating gears therein for the purpose of converting rotational speed and torque into another speed and torque. Vehicle 10 is shown as an agricultural vehicle, although it is recognized that the invention may be also incorporated into any other vehicle, such as a construction, forestry, industrial, and mining vehicle.

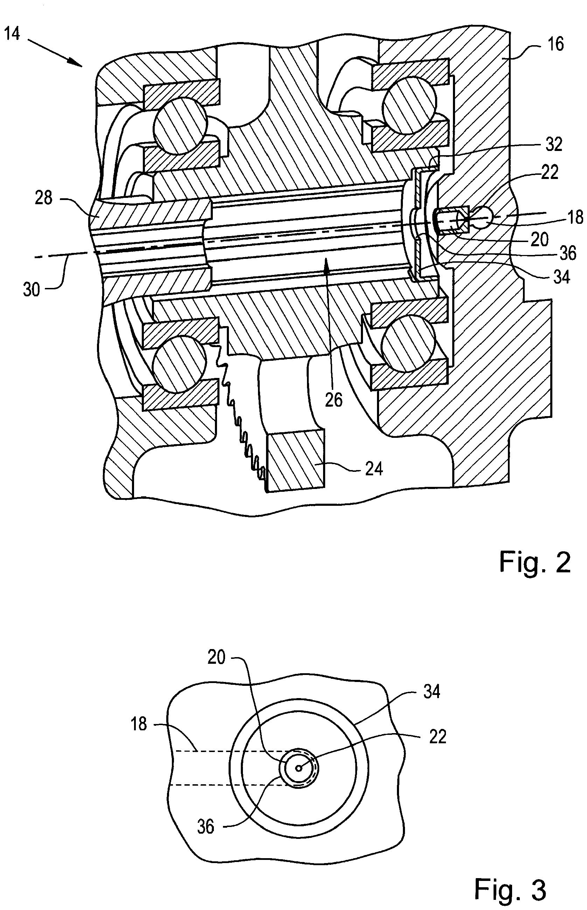

Referring to Figs. 2 and 3, the gearbox 14 includes gearbox housing 16, having a lubrication passage 18 therein. Lubrication passage 18 is in fluid communication with lubrication cavity 20 and spray nozzle 22. Lubrication fluid (i.e., lubrication oil) passing through the lubrication passage 18 then flows first through spray nozzle 22 and then through lubrication cavity 20 as it is directed towards a rotating component or gear 24, and, more specifically, to internal splines 26 along an axially extending opening of the gear 24. Spray nozzle 22 may be a machined opening to lubrication passage 18. Lubrication cavity 20 serves to protect spray nozzle 22 and to focus the lubrication fluid emanating from spray nozzle 22. Further, lubrication cavity 20 allows the stream of lubrication fluid to be somewhat shielded from the movement of air currents within gearbox housing 16.

The internal splines 26 forming a splined connection together with a splined shaft 28 having a pattern of external splines thereon which corresponds to the internal splines 26.

An axis 30 defines the rotational axis of the gear 24, which corresponds to the rotational axis of splined shaft 28. Axis 30 also generally corresponds to the orientation of lubrication fluid coming from spray nozzle 22 and lubrication cavity 20 as it is directed toward the splined connection, and more precisely, to the interaction of the external splines of the splined shaft 28 with the internal splines 26 of the gear 24. At one end of the internal splines 26, there is a counterbore 32, which is sized so that plug 34 may frictionally engage counterbore 32 to be retained therein. Plug 34 is symmetrical, having a cup-like shape with a hole 36 centrally located therein. Hole 36 located in plug 34 is positioned such that lubrication fluid emanating from spay nozzle 22 and lubrication cavity 20 is directed generally through hole 36 so that lubrication fluid is supplied to the splined connection.

Splined shaft 28 can slide in the direction of axis 30 while gear 24 and splined shaft 28 are rotating, wherein the lubrication fluid contained therein helps prevent any fretting of the splined connection. There is a distance between hole 36 and lubrication cavity 20 so that, if lubrication fluid is to substantially fill the open cavity defined by plug 34, internal splines 26 and splined shaft 28, lubrication fluid can exit back through hole 36. Also, in the event that splined shaft 28 slides towards plug 34, lubrication fluid may be forced back through hole 36. The positioning of plug 34 in counterbore 32 thereby provides a lubrication dam in which lubrication fluid entering through hole 36 will, by centrifugal force, be thrown against internal splines 26 with the lubrication fluid moving generally between splined shaft 28 and internal splines 26 to keep the splined connection well-lubricated.

Referring now to Fig. 3, an expanded back view through plug 34 is shown. Spray nozzle 22 is substantially concentrically located relative to both lubrication cavity 20 and hole 36 of plug 34. Lubrication passage 18 is shown in fluid communication with spray nozzle 22 and lubrication cavity 20. Even though there is a space between gearbox housing 16 and gear 24, and hence also with lubrication cavity 20, internal splines 26 receive lubrication fluid that passes through lubrication passage 18, so even the internal splines 26 can be considered as being in fluid communication with lubrication passage 18.

Counterbore 32 is machined into back of gear 24, wherein plug 34 can be considered to be a soft plug with hole 36 therein. Lubrication fluid is sprayed through hole 36 passes then through plug 34 in the area of the splined connection. Plug 34 traps the lubrication fluid and forces it to go through the splines by way of centrifugal head pressure created by the rotation of the parts. This advantageously eliminates, or at least minimizes, spline fretting of the splined connection when the splines are spinning at a high speed. Additionally, it eliminates the need for complex machining and/or seals on or around the outside of the area of the splined connection to force lubrication fluid into the splines.

## Claims

1. A lubrication device for lubricating a splined connection, the device comprising at least one rotating component (24) having internal splines (26) along an axially extending opening; and a splined shaft (28) having a pattern of external splines thereon which corresponds to said internal splines (26), **characterized in that** a plug (34) is positioned in said axially extending opening, said plug (34) having a hole (36) centrally located therein.

2. The lubrication device according to claim 1, **characterized in that** said splined shaft (28) and said plug (34) are located on opposite ends of the axially extending opening.

3. The lubrication device according to claim 1 or 2, **characterized in that** said splined shaft (28) is driven by said rotating component (24).

4. The lubrication device according to one of claims 1 to 3, **characterized by** a lubrication spray nozzle (22) directing lubrication fluid through said hole (36).

5. The lubrication device according to one of claims 1 to 4, **characterized in that** said plug (34) is symmetrical, having a cup-like shape.

6. The lubrication device according to one of claims 1 to 5, **characterized in that** said axially extending opening has a counterbore (32) which is sized so that said plug (34) is frictionally engaged.

7. The lubrication device according to one of claims 1 to 6, **characterized in that** a lubrication passage (18) is directed toward said hole (36) being substantially aligned with said axially extending opening.

8. A vehicle, comprising a power generating device (12); and a power transfer device (14) coupled to said power generating device (12), **characterized by** a lubrication device according to one of claims 1 to 7.
